(19) **Europäisches Patentamt**
**European Patent Office**
**Office européen des brevets**

(11) **EP 3 039 585 B1**

(12) **FASCICULE DE BREVET EUROPEEN**

(45) Date de publication et mention de la délivrance du brevet:
**26.12.2018 Bulletin 2018/52**

(21) Numéro de dépôt: **14767060.8**

(22) Date de dépôt: **29.08.2014**

(51) Int Cl.:
**G06F 17/50** (2006.01)   **F28F 9/02** (2006.01)
**G01N 30/60** (2006.01)

(86) Numéro de dépôt international:
**PCT/FR2014/052145**

(87) Numéro de publication internationale:
**WO 2015/028758 (05.03.2015 Gazette 2015/09)**

(54) **PROCEDE DE DETERMINATION DE CARACTERISTIQUES D'ORIFICES A MENAGER A TRAVERS UNE PLAQUE ET PROGRAMME CORRESPONDANT**

VERFAHREN ZUR BESTIMMUNG DER EIGENSCHAFTEN VON AUF EINER PLATTE ZU BOHRENDEN LÖCHERN UND ENTSPRECHENDES PROGRAMM

METHOD FOR DETERMINING CHARACTERISTICS OF HOLES TO BE PROVIDED THROUGH A PLATE AND CORRESPONDING PROGRAMME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.08.2013 FR 1358304**

(43) Date de publication de la demande:
**06.07.2016 Bulletin 2016/27**

(73) Titulaires:
• **Centre National de la Recherche Scientifique**
  **75016 Paris (FR)**
• **Universite de Nantes**
  **44000 Nantes (FR)**

(72) Inventeurs:
• **LUO, Lingai**
  **F-44300 Nantes (FR)**
• **FAN, Yilin**
  **F-44240 La Chapelle sur Erdre (FR)**
• **FLAMANT, Gilles**
  **F-66800 Llo (FR)**
• **WEI, Min**
  **44300 Nantes (FR)**

(74) Mandataire: **Dutreix, Hugues Ours et al**
  **Ipsilon**
  **3, rue Edouard Nignon**
  **44300 Nantes (FR)**

(56) Documents cités:
• **W. WANG ET AL: "Effects of Distribution Channel Dimensions on Flow Distribution and Pressure Drop in a Plate-Fin Heat Exchanger", CHEMICAL ENGINEERING & TECHNOLOGY, vol. 36, no. 4, 7 mars 2013 (2013-03-07), pages 657-664, XP055126769, ISSN: 0930-7516, DOI: 10.1002/ceat.201200584**
• **WEN J ET AL: "Study of flow distribution and its improvement on the header of plate-fin heat exchanger", CRYOGENICS, ELSEVIER, KIDLINGTON, GB, vol. 44, no. 11, novembre 2004 (2004-11), pages 823-831, XP004522688, ISSN: 0011-2275, DOI: 10.1016/J.CRYOGENICS.2004.04.009**

**Description**

La présente invention concerne de manière générale la distribution de fluide dans un circuit.

Les appareils qui comprennent un circuit parcouru par un fluide nécessitent, pour leur bon fonctionnement, que le fluide soit correctement distribué dans ledit circuit. En particulier, dans le cas d'un échangeur de chaleur qui comprend deux circuits de transfert parcourus par deux fluides distincts, et agencés l'un avec l'autre pour permettre de transférer des calories du fluide parcourant l'un des circuits de transfert au fluide parcourant l'autre circuit de transfert, la mauvaise distribution ou répartition de fluide dans l'un et/ou l'autre desdits circuits, a pour conséquence la diminution des performances dudit échangeur, et éventuellement l'apparition de points chauds et/ou de courts circuits. Un risque de dégradation dudit échangeur existe aussi.

Il est connu de l'état de la technique, et notamment du document WEN J. et al. Intitulé "Study of flow distribution and its improvement on the header of plate-fin heat exchanger", d'introduire une plaque perforée en travers du passage de fluide du circuit pour tenter d'améliorer l'homogénéité de la distribution de fluide dans le circuit en aval de cette plaque. Cependant, les caractéristiques des orifices sont choisies de manière empirique pour chaque géométrie de circuit, ce qui ne permet pas d'obtenir une homogénéité de distribution du flux de fluide de manière fiable et répétable d'une géométrie de circuit à une autre, ou d'un point de fonctionnement à un autre. En outre, de multiples essais sont nécessaires et une telle mise en oeuvre présente un coût élevé, est peu efficace et très longue.

On connait aussi de l'état de la technique le document W. WANG et al. "Effects of Distribution Channel Dimensions on Flow Distribution and Pressure Drop in a Plate-Fin Heat Exchanger" qui prévoit une étape de modification de la largeur des canaux de sortie d'un circuit, ce qui est onéreux et non optimal. Ce document ne prévoit pas d'insérer une plaque perforée en travers du passage de fluide du circuit.

La présente invention a pour but de proposer un procédé de détermination des caractéristiques des orifices à ménager dans une plaque pour pouvoir obtenir une meilleure homogénéité de la distribution de fluide en aval de la plaque perforée, de manière rapide et fiable, et applicable à différentes conceptions de circuit et différentes conditions de travail.

Un autre but de l'invention est aussi de pouvoir concevoir un circuit qui inclut une plaque réalisée à l'aide dudit procédé, et dont l'encombrement est limité et avec une perte de charge limitée pour le fluide qui traverse la plaque.

A cet effet, l'invention a pour objet un procédé mis en oeuvre par ordinateur de détermination de caractéristiques d'orifices à ménager à travers une plaque, ladite plaque étant destinée à être positionnée dans un circuit en travers du passage de fluide, ledit procédé comprend les étapes suivantes :

- a) De préférence, définition de données opérationnelles du circuit, lesdites données comprenant : la température du fluide, et/ou la pression du fluide, et/ou le flux de chaleur reçu et/ou la gravité ;

- b) Définition de données du fluide, dont le débit entrant dans le circuit, noté Q, et, de préférence, la viscosité et/ou la compressibilité et/ou la densité dudit fluide, en fonction de la température du fluide et/ou de la pression du fluide ;

- c) Définition de caractéristiques relatives aux orifices, lesdites caractéristiques comprenant :

  ▪ un nombre d'orifices, noté N,
  ▪ pour chaque orifice,

    - soit un segment, appelé segment de contrôle, de longueur notée $L^*_i$,
    - soit une surface appelée surface de contrôle, notée $S^*_i$,

  chaque segment ou surface de contrôle correspondant à un découpage d'au moins une partie de la longueur, notée L, de la plaque ou de la surface, notée S, de la plaque de telle sorte que les segments ou surfaces de contrôle sont de préférence jointi(f)(ve)s et contiennent l'orifice correspondant ;

  ▪ le diamètre, noté $d_i$, ou la surface, notée $a_i$, de passage de fluide de chaque orifice ;

- d) Maillage dudit circuit, de la plaque avec les orifices correspondants et, le cas échéant, d'un ou des autres éléments présents à l'intérieur dudit circuit ;

- e) Détermination de la vitesse du flux de fluide en plusieurs mailles, de préférence au niveau de chaque maille, en fonction desdites données de fluide et, de préférence, desdites données opérationnelles du circuit ;

- f) Calcul du débit de fluide $Q_i$ à travers chaque orifice de la plaque au moins en fonction du diamètre $d_i$ ou de la surface $a_i$ dudit orifice, et de la vitesse déterminée du flux de fluide au niveau dudit orifice,

- g) Calcul pour chaque orifice du débit surfacique, noté $Qs_i$, par division du débit de fluide Qi par la longueur $L^*_i$ du segment de contrôle ou par la surface $S^*_i$ de contrôle associée audit orifice, et calcul du débit surfacique moyen, noté $\overline{Q}_s$, correspondant au rapport du débit entrant Q sur la longueur L ou la surface S de la plaque,

- h) Détermination du caractère optimal ou non des caractéristiques des orifices de la plaque comprenant :
  Pour chaque orifice, la comparaison du débit surfacique Qsi, avec le débit surfacique moyen $\overline{Q}_s$, et

- si, pour chaque orifice, la différence en valeur absolue entre le débit surfacique $Qs_i$ et le débit surfacique moyen $\overline{Q}_s$, est comprise dans une plage de valeurs prédéfinie, alors les caractéristiques des orifices sont considérées comme optimales,
- sinon

   ■ Modification d'au moins une desdites caractéristiques d'au moins une partie des orifices ;
   ■ Répétition des étapes d) à h).

Un tel procédé selon l'invention permet d'optimiser la distribution de fluide au travers d'une plaque perforée disposée en travers du passage de fluide d'un circuit de circulation de fluide avec une répartition plus uniforme ou homogène sur une section de passage du circuit en aval de la plaque perforée.

Cette section de passage alimentée en fluide en aval de la plaque est formée en trois dimensions (3D) par une surface et peut être ramenée à une ligne pour un calcul en deux dimensions (2D) comme détaillé ci-après.

Plus précisément, le fait de choisir comme paramètre le débit surfacique, c'est-à-dire le débit rapporté à une longueur ou surface de contrôle, représentative de la position relative des orifices les uns par rapport aux autres, et le fait de comparer les débits surfaciques de chaque orifice par rapport au débit surfacique moyen en rapprochant la valeur de débit surfacique de chaque orifice de la valeur de débit surfacique moyen, permet d'obtenir une meilleure homogénéité de la distribution, notamment de la vitesse de fluide en aval de la plaque perforée, et donc d'améliorer l'efficacité de l'installation et de réduire le risque de dégradation de l'installation.

Suivant le type d'appareil dans lequel ledit circuit est implanté, l'espace ou domaine du circuit alimenté en fluide en aval de la plaque perforée peut être utilisé pour mettre en oeuvre une fonction telle que : échange de chaleur, réaction chimique ou séparation de fluide.

Ainsi, cet espace ou domaine en aval de la plaque peut comprendre :

- un faisceau de tubes en parallèle formant partie d'un échangeur de chaleur ou
- un monolithe catalytique,
- une colonne de chromatographie;
- une colonne d'échange d'ions;
- un récepteur ou un réacteur solaire ;
- une chaudière ;
- une colonne de distillation ; ou
- une colonne remplie de garnissage quand plusieurs fluides sont concernés.

Selon une caractéristique avantageuse de l'invention, le diamètre $d_i$ ou la surface $a_i$ de passage de fluide de l'orifice est modifié(e) dans le sens d'une augmentation du diamètre $d_i$ de l'orifice si le débit surfacique $Qs_i$ de l'orifice est inférieur au débit surfacique moyen $\overline{Q}_s$, et inversement.

Avantageusement, ladite au moins une caractéristique modifiée d'au moins une partie des orifices est le diamètre $d_i$ ou la surface $a_i$ de passage de fluide de l'orifice.

Selon une caractéristique avantageuse de l'invention, ladite au moins une caractéristique modifiée d'au moins une partie des orifices est le nombre N d'orifices.

Le fait d'augmenter le nombre d'orifices, éventuellement après avoir modifié leur diamètre, permet d'affiner l'homogénéité de la distribution en aval de la plaque.

Selon une caractéristique avantageuse de l'invention, ladite au moins une caractéristique modifiée d'au moins une partie des orifices est la longueur $L^*_i$ du segment ou la surface $S^*_i$ de contrôle de l'orifice, sans contrainte d'égalité avec la longueur $L^*_i$ de segment ou la surface $S^*_i$ de contrôle des autres orifices.

Le fait de modifier la longueur $L^*_i$ du segment ou la surface $S^*_i$ de contrôle de l'orifice indépendamment des autres orifices, permet de modifier la position dudit orifice par rapport aux autres orifices.

Selon une caractéristique avantageuse de l'invention, la longueur $L^*_i$ de chaque segment de contrôle, ou chaque surface $S^*_i$ de contrôle, est définie comme étant égale à la longueur de chacun des autres segments, ou égale à chacune des autres surfaces de contrôle.

Selon une caractéristique avantageuse de l'invention, l'étape de modification d'au moins une caractéristique d'au moins une partie des orifices est réalisée en conservant une valeur de porosité de plaque constante, ladite porosité de plaque étant définie comme la somme des diamètres, ou surfaces, de passage des orifices divisée par la longueur, ou surface, de la plaque.

Le fait de travailler à porosité de plaque constante lors de l'exécution de plusieurs cycles de calcul permet d'augmenter les chances de faire converger les calculs et permet par la suite d'exécuter plusieurs séries de cycle de calcul avec pour chaque série une valeur donnée de porosité et une configuration donnée des orifices pour pouvoir ensuite sélectionner la configuration d'orifices la plus adaptée.

Selon une caractéristique avantageuse de l'invention, le diamètre $d_i$ ou la surface $S_i$ de passage de fluide de l'orifice, noté $d_{i,t}$ ou $a_{i,t}$, est modifié en $d_{i,t+1}$ ou $a_{i,t+1}$ de telle sorte que :

$$\Delta d_{i,t+1} = \gamma d_{i,t}\left(1 - \frac{Q_{si}}{\overline{Q}_s}\right)$$

avec $\Delta d_{i,t+1} = d_{i,t+1} - d_{i,t}$ et $\gamma$ étant un coefficient réel stric-

tement positif

ou

$$\Delta a_{i,t+1} = \gamma a_{i,t}\left(1 - \frac{Q_{si}}{\overline{Q_s}}\right)$$

avec $\Delta a_{i,t+1} = a_{i,t+1} - a_{i,t}$ et $\gamma$ étant un coefficient réel strictement positif

Selon une caractéristique avantageuse de l'invention, pour chaque orifice, le diamètre $d_i$, ou la surface $a_i$, de passage et la longueur $L^*_i$ du segment, ou la surface $S^*_i$, de contrôle sont choisi(e)s de telle sorte que $d_i/L^*_i$ est inférieur ou égal à 1, ou $a_i/S^*_i$ est inférieur ou égal à 1. En particulier $di/L^*i$ est inférieur ou égal à 1, ou $ai/S^*i$ est de préférence maintenu inférieur ou égal à 1 quelle que soit l'itération, c'est-à-dire quel que soit le cycle de calcul.

Le fait de maintenir une telle contrainte dans le rapport du diamètre $d_i$, ou de la surface $a_i$, de passage, et de la longueur $L^*_i$ du segment, ou de la surface $S^*_i$, de contrôle, permet d'améliorer l'homogénéité de la vitesse en aval de la plaque en limitant l'interaction du fluide traversant un orifice vis-à-vis du fluide traversant les orifices voisins.

Selon une caractéristique avantageuse de l'invention, les étapes d) à h) correspondant à un cycle de calcul, le procédé comprend l'exécution d'une première série de cycles de calcul, avec modification à l'étape h) d'une caractéristique d'au moins une partie des orifices, et l'exécution d'une deuxième série de cycles de calcul, avec modification à l'étape h) d'une autre caractéristique d'au moins une partie des orifices.

Selon une caractéristique avantageuse de l'invention, chaque pluralité de cycles est réalisée avec une valeur de porosité de plaque constante d'un cycle à l'autre d'une même série, mais avec une valeur de porosité de plaque différente d'une série à l'autre.

Selon une caractéristique avantageuse de l'invention, le procédé comprend :

- l'exécution de la première série de cycles de calcul jusqu'à ce que les caractéristiques des orifices définies soient considérées comme optimales, et
- l'exécution de la deuxième série de cycles de calcul jusqu'à ce que les caractéristiques des orifices définies soient considérées comme optimales,
- le calcul pour chacune desdites séries de cycles de calcul de la perte de charge associée aux caractéristiques des orifices considérées comme optimales,
- sélection des caractéristiques des orifices considérées comme optimales correspondant à la série de cycle de calcul pour laquelle la perte de charge est la plus petite.

Selon une caractéristique avantageuse de l'invention, les étapes d) à h) correspondant à un cycle de calcul, une série de cycle de calcul est réalisée avec une plaque de forme et/ou dimension donnée(s) et une deuxième série de calcul est réalisée avec une autre forme et/ou dimension de plaque.

L'invention concerne aussi un programme d'ordinateur comprenant des instructions de code de programme pour l'exécution des étapes du procédé tel que décrit ci-dessus, lorsque ledit programme est exécuté sur un ordinateur.

L'invention sera bien comprise à la lecture de la description suivante d'exemples de réalisation, en référence aux dessins annexés dans lesquels :

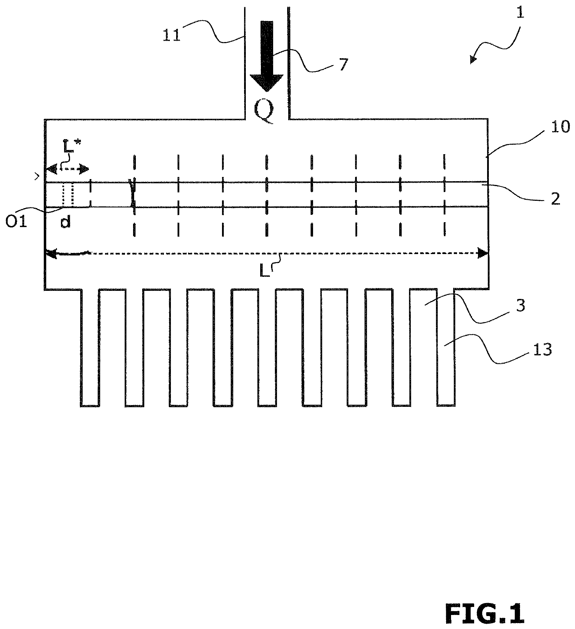

- la figure 1 est une vue schématique en deux dimensions d'un circuit dans lequel est placé une plaque perforée, des caractéristiques d'un orifice et de la plaque utilisables dans un mode de réalisation de l'invention étant référencées;
- la figure 2 est une vue schématique en deux dimensions d'un circuit d'un échangeur de chaleur en travers duquel est positionnée une plaque perforée;
- la figure 3 est une vue d'un graphique avec en ordonnée le rapport du diamètre de chaque orifice sur le diamètre moyen des orifices d'une plaque correspondant par exemple à celle de la figure 2, et en abscisse les références des orifices correspondants pour une série de cinq cycles de calcul, notés « Step » de 0 à 4, conformément à une mode de réalisation de l'invention;
- la figure 3A est une vue schématique montrant les différents diamètres des orifices de la plaque définis à la figure 3 pour la série des cinq cycles de calcul, notés « Step » de 0 à 4 ;
- la figure 4 est une image montrant en densité de points la distribution de vitesse dans le circuit de l'échangeur de la figure 3 dont la plaque est perforée avec des diamètres d'orifices correspondant au cycle Step4 de la figure 3 ou 3A;
- la figure 4A est une image montrant en densité de points la distribution de vitesse dans le circuit de l'échangeur de la figure 3 dont la plaque est perforée avec des diamètres d'orifices correspondant au cycle Step0 de la figure 3 ou 3A ;
- la figure 5 est un schéma de blocs illustrant les étapes d'un mode de réalisation du procédé selon l'invention ;
- la figure 6 est une vue schématique d'une plaque carrée de surface S, partitionnée en surfaces de contrôle $S^*_i$, de forme carrée, qui contiennent chacune un orifice de surface de passage $a_i$, les caractéristiques de ladite plaque étant utilisée pour exécuter un mode de réalisation du procédé selon l'invention, avec un calcul en 3D ;
- la figure 7 est une vue schématique d'une plaque ronde de surface S, dont une partie est divisée en surfaces de contrôle $S^*_i$, de forme hexagonale, qui contiennent chacune un orifice de surface de passage $ai$, les caractéristiques de ladite plaque étant utilisées pour exécuter un mode de réalisation du procédé selon l'invention, avec un calcul en 3D.

En référence aux figures et comme rappelé ci-dessus, l'invention concerne un procédé de détermination des caractéristiques des orifices à ménager à travers une plaque 2 positionnée dans un circuit pour homogénéiser la distribution, de préférence la vitesse, du fluide en aval de ladite plaque 2.

Comme détaillé ci-après, les caractéristiques des orifices comprennent notamment le nombre, le diamètre et éventuellement la position relative de chaque orifice. Dans l'exemple illustré aux figures, lesdits orifices sont au nombre de 9 et référencés O1 à O9. Bien entendu le nombre d'orifices peut être différent et est noté N.

Ladite plaque 2 est positionnée dans le circuit 10 en travers du passage de fluide 7 en aval de l'entrée 11 du circuit.

Dans l'exemple illustré aux figures, le circuit 10 fait partie d'un échangeur 1 de chaleur et comprend une partie 13 formant des conduits de fluide parallèles agencés avec des conduits 3 d'un autre circuit de fluide dudit échangeur de manière à permettre un échange de chaleur entre le fluide passant les conduits 13 et le fluide passant par lesdits autres conduits 3.

Dans la suite de la description, les caractéristiques de ces orifices sont déterminées pour une géométrie définie en deux dimensions (2D). Bien entendu, comme détaillé ci-après le procédé décrit ci-dessous est aussi applicable à une géométrie définie en trois dimensions (3D).

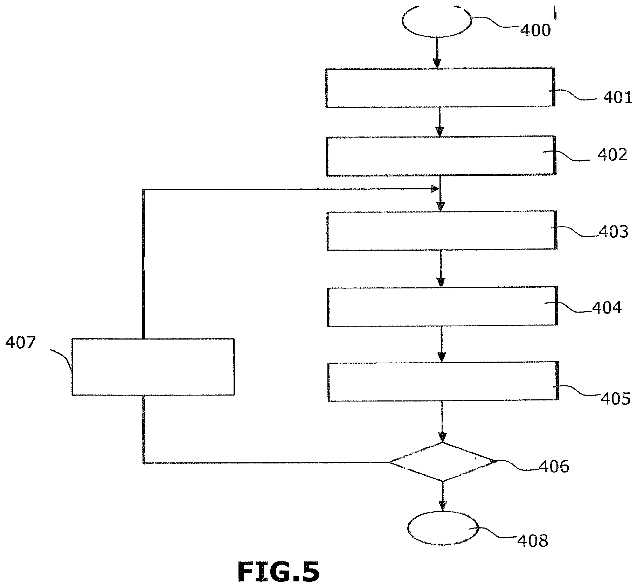

Selon un mode de réalisation, le procédé de détermination des caractéristiques d'orifices de la plaque comprend les étapes suivantes, détaillées en lien avec le bloc-diagramme de la figure 5.

Au démarrage 400 du procédé, on définit des données opérationnelles du circuit, lesdites données comprenant avantageusement la température du fluide, et/ou la pression du fluide, et/ou le flux de chaleur reçu et/ou la gravité.

A l'étape 401, on définit des données du fluide 7 entrant dans le circuit en amont de la plaque 2. Ces données de fluide comprennent le débit Q entrant dans le circuit, et de préférence la viscosité et/ou la compressibilité et/ou la densité dudit fluide, en fonction de la température du fluide et/ou de la pression du fluide.

Des caractéristiques relatives aux orifices sont aussi définies à l'étape 402. Lesdites caractéristiques comprennent le nombre N d'orifices, et pour chaque orifice on définit, dans le cas d'une géométrie 2D, un segment, appelé segment de contrôle, de longueur notée $L^*_i$. Chaque segment de contrôle correspond à un découpage d'une partie ou de la totalité de la longueur, notée L, de la plaque 2 de telle sorte que les segments sont jointifs et que chaque segment inclut l'orifice i correspondant.

Pour une géométrie en 3D, on définit à la place du segment de contrôle une surface appelée surface de contrôle, notée $S^*_i$. Dans ce cas, chaque surface de contrôle correspond à un découpage d'une partie ou de la totalité de la surface, notée S, de la plaque 2 de telle sorte que les surfaces de contrôle sont jointives et que chaque surface de contrôle entoure l'orifice i correspondant.

Les segments ou surfaces de contrôle sont représentati(f)(ve)s de la distance ou de la surface qui sépare l'orifice d'un ou des autres orifices et donc de l'étendue de la zone juste en aval de la plaque sur laquelle le fluide va s'étendre en sortie de l'orifice correspondant.

Le diamètre, noté $d_i$, ou la surface, notée $a_i$, de passage de fluide de chaque orifice est aussi défini(e). Dans l'exemple illustré aux figures, le diamètre $d_i$ est initialement identique d'un orifice à l'autre. En variante, la valeur initiale du diamètre de chaque orifice peut être différente d'un orifice à l'autre. Il en est de même pour la surface aide chaque orifice dans le cas d'une modélisation 3D.

La porosité locale d'un orifice, noté $\varepsilon_i$, correspond à la porosité de la plaque 2 autour de l'orifice i avec i variant de $O_1$ à $O_N$. N= 9 dans l'exemple illustré aux figures. En 2D, la porosité locale est égale au diamètre di de l'orifice sur la longueur $L^*_i$.

On définit ainsi l'équation :

$$\varepsilon_i = \frac{d_i}{L^*_i}$$

En 3D, la porosité locale est définie comme ci-dessus en remplaçant la longueur $L^*_i$ par la surface $S^*_i$, et $d_i$ par $a_i$.

En 3D, la surface $S^*_i$, remplacée par la longueur $L^*_i$ en 2D, correspond à une surface autour de l'orifice, ou encore à un volume de contrôle de la plaque autour de l'orifice si l'on considère l'épaisseur de la plaque. En 3D, la surface $a_i$, remplacée par le diamètre $d_i$ en 2D, correspond à la section de passage de l'orifice ou encore au volume de l'orifice si l'on considère l'épaisseur de la plaque.

Lorsque les longueurs de segments de contrôle sont les mêmes d'un orifice à l'autre, soit une longueur $L^*$ locale, ladite longueur locale $L^*$ correspond à la longueur L de la plaque, divisée par le nombre d'orifices, notés N, présents sur cette longueur de ligne, soit :

$$N = \frac{L}{L^*}$$

En 2D, le rapport $d_i/L^*_i$ est choisi inférieur ou égal 1. De manière similaire en 3D, le rapport $a_i/S^*_i$ est choisi inférieur ou égal à 1. Comme rappelé ci-dessus, cette contrainte est de préférence respectée quelle que soit l'itération de $d_i$ ou $a_i$.

La porosité globale Φ de la plaque est égale à la somme sur i=1 à N de $d_i$ divisée par la longueur L de la plaque 2, soit :

$$\Phi = \frac{\sum\limits_{i=1}^{N} d_i}{L}$$

En 3D, la porosité est définie comme ci-dessus en remplaçant le diamètre $d_i$ par la surface de passage $a_i$ et la longueur L de la plaque par la surface S de la plaque.

Le circuit 10 et son contenu, notamment la plaque 2 avec ses orifices sont maillés à l'étape 403. Le cas échéant les autres éléments 3 présents à l'intérieur dudit circuit 10, tels que les conduits 3 de l'autre circuit de l'échangeur sont aussi maillés.

En particulier, l'enveloppe du circuit, l'entrée et la sortie ainsi que l'intérieur dudit circuit sont maillés. Le maillage d'une géométrie est nécessaire pour calculer numériquement le comportement dynamique du fluide. Il est une technique classique pour l'Homme du Métier et ne sera donc pas détaillé. A titre d'exemple, le maillage peut être réalisé à l'aide du logiciel de maillage GAMBIT (marque déposée).

Le comportement dynamique du fluide dans le circuit est simulé de manière à déterminer à l'étape 404 la vitesse du flux de fluide en chaque maille du circuit en fonction des données de fluide, de préférence des données opérationnelles, des caractéristiques des orifices et du maillage. La simulation peut être réalisée à l'aide d'un logiciel de simulation numérique, tel que le logiciel FLUENT (marque déposée) édité par la société ANSYS (marque déposée). Les points ou mailles de calcul de vitesse de fluide sont choisis en nombre suffisant pour être représentatifs de l'écoulement de fluide en chaque zone du circuit.

A l'étape 405, le débit de fluide $Q_i$ à travers chaque orifice de la plaque 2 perforée est alors calculé en fonction de la vitesse déterminée du flux de fluide au niveau dudit orifice, du diamètre (mode 2D) ou de la surface (mode 3D) de passage dudit orifice. Préférentiellement le calcul de Qi tient compte aussi d'autres propriétés physiques dudit fluide, telles que sa viscosité, sa compressibilité, et sa densité.

On calcule ensuite le débit surfacique $Qs_i$ de chaque orifice i par division de $Q_i$ par la longueur $L^*_i$, ou la surface $S^*_i$, de contrôle, soit
$Qs_i = Q_i/L^*_i$ en 2D ou $Qs_i = Q_i/S^*_i$ en 3D

On définit aussi une valeur de débit surfacique moyen, notée $\overline{Q}_s$, comme le rapport du débit Q entrant dans le circuit sur la longueur L de la plaque (en 2D) ou sur la surface S de la plaque (en 3D).

Dans le cas particulier de l'exemple illustré aux figures, les longueurs $L^*$ sont identiques d'un segment à un autre.

A l'étape 406, pour chaque i = 1 à N, on compare $Qs_i$ par rapport à $\overline{Q}_s$ pour déterminer le caractère optimal ou non des caractéristiques des orifices définies précédemment.

Si la différence en valeur absolue entre $Qs_i$ et $\overline{Q}_s$ est inférieure à une valeur donnée, appelée valeur d'erreur, par exemple 1% ou 5%, les caractéristiques des orifices sont considérées comme optimales et le calcul peut être arrêté (étape 408).

Sinon, à l'étape 407, on modifie le diamètre $d_i$, ou la surface $a_i$, d'une partie des ou de chacun des orifices, à l'aide de l'équation suivante :

$$\Delta d_{i,t+1} = \gamma d_{i,t}\left(1 - \frac{Q_{si}}{\overline{Q}_s}\right)$$

En 2D :

avec $\Delta d_{i,t+1} = d_{i,t+1} - d_{i,t}$ et $d_{i,t}$ correspondant à la valeur de $d_i$ avant modification et $d_{i,\,t+1}$ correspondant à la nouvelle valeur du diamètre $d_i$, c'est-à-dire la nouvelle valeur d'itération de $d_i$ qui va être utilisée pour relancer les calculs ;

$\gamma$ étant un coefficient réel strictement positif

ou, de manière similaire en 3D :

$$\Delta a_{i,t+1} = \gamma a_{i,t}\left(1 - \frac{Q_{si}}{\overline{Q}_s}\right)$$

avec $\Delta a_{i,t+1} = a_{i,t+1} - a_{i,t}$

Le choix dans cette équation de modifier $d_i$ ou $a_i$ en fonction de la comparaison de $Qs_i/\overline{Q}_s$ avec la valeur 1 permet non seulement d'accélérer la convergence du calcul, mais aussi de conserver une porosité globale constante pour la plaque lorsque les longueurs de segment de contrôle $L^*_i$ ou les surfaces de contrôle $S^*_i$ sont identiques d'un orifice à un autre.

On répète ensuite les étapes de calcul 403 à 406 jusqu'à ce que la différence en valeur absolue, pour chaque orifice, entre $Qs_i$ et $\overline{Q}_s$ soit inférieure à une valeur donnée, appelée valeur d'erreur, par exemple 1% ou 5%. Préférentiellement, la répétition des étapes de calcul 403 à 406 s'effectue en conservant la porosité globale constante pour au moins une série de répétitions donnée.

L'ensemble des étapes 403 à 406 décrites ci-dessus est appelé cycle de calcul dans la suite de la description.

Dans le cas où, après un nombre donné d'itérations ou cycles de calculs, cette différence entre $Qs_i$ et $\overline{Q}_s$ reste dans une plage de valeur prédéfinie et supérieure à la valeur d'erreur, on considère que le calcul ne converge pas.

En cas de non convergence, on modifie alors une autre caractéristique des orifices, par exemple le nombre N d'orifices et on relance un ou plusieurs cycles de calcul comme détaillé ci-dessus.

De manière générale, on peut prévoir que le procédé comprend l'exécution d'une première série de cycles de calcul, avec, pour chaque cycle, la modification d'une caractéristique d'au moins une partie des orifices, et l'exécution d'une deuxième série de cycles de calcul, avec, pour chaque cycle, la modification d'une autre caractéristique d'au moins une partie des orifices.

Préférentiellement, la caractéristique modifiée lors de la première série de cycles de calcul est le diamètre $d_i$ (2D) ou la surface $a_i$ (3D) de chaque orifice, puis la caractéristique modifiée lors de la deuxième série de cycles de calcul est le nombre N d'orifices.

On peut aussi prévoir de modifier la position relative des orifices sur la plaque en modifiant la longueur de leur segment ou leur surface de contrôle les uns par rapport aux autres. Autrement dit, ladite caractéristique modifiée des orifices peut être la longueur $L^*_i$ du segment ou la surface $S^*_i$ de contrôle de l'orifice sans contrainte d'égalité avec les longueurs de segment ou les surfaces de contrôle des autres orifices.

Préférentiellement, chaque pluralité de cycles est réalisée avec une valeur de porosité de plaque constante d'un cycle à l'autre d'une même série, mais avec une valeur de porosité de plaque différente d'une série à une autre.

Selon un mode de réalisation avantageux du procédé selon l'invention, on peut prévoir de réaliser une première série de cycles de calcul jusqu'à ce que les caractéristiques des orifices définies soient considérées comme optimales, puis on réalise une ou plusieurs autres série(s) de cycles de calcul jusqu'à ce que les caractéristiques des orifices définies soient aussi considérées comme optimales. On calcule pour chacune des séries la perte de charge associée aux caractéristiques des orifices considérées comme optimales, et on sélectionne les caractéristiques des orifices considérées comme optimale correspondant à la série de cycle de calcul pour laquelle la perte de charge est la plus petite.

Une fois retenue la configuration d'orifices considérée comme optimale du point de vue de l'homogénéité des débits surfaciques à travers chaque orifice et éventuellement du point de vue de la perte de charge, les orifices peuvent être ménagés dans la plaque conformément à ladite configuration retenue et la plaque peut être introduite dans le circuit de l'installation à la position prévue.

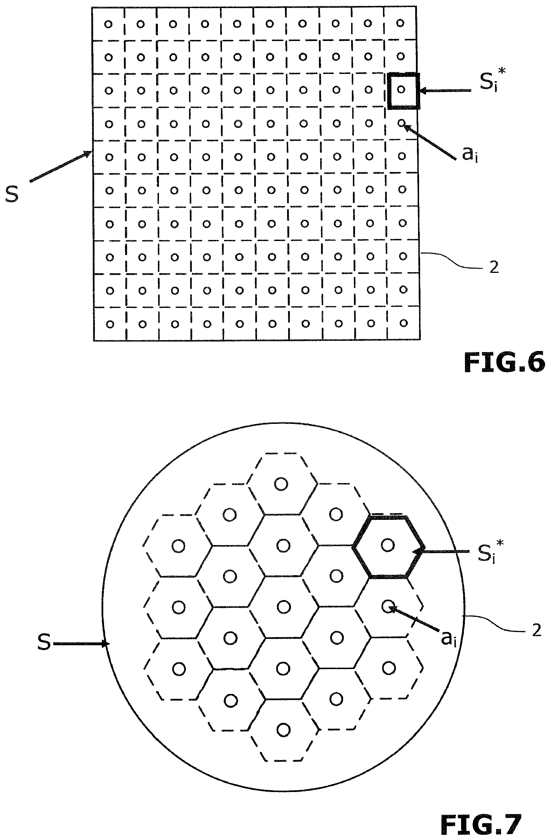

Selon un autre mode de réalisation avantageux, on peut aussi prévoir de réaliser une série de cycle de calcul avec une plaque de forme et/ou dimension donnée(s) (par exemple carrée comme illustré à la figure 6), et au moins une deuxième série de calcul avec une autre forme et/ou dimension de plaque (par exemple ronde comme illustré à la figure 7).

Il est ainsi possible de sélectionner la forme et/ou dimension de la plaque qui permet d'obtenir la meilleure distribution de fluide. Il est alors possible de fabriquer plusieurs plaques de forme et/ou dimension correspondant à au moins une partie des séries de calcul effectuées pour permettre à l'opérateur de remplacer une plaque par une autre en fonction des effets qu'il souhaite obtenir.

Une telle installation peut être appliquée à la séparation d'air, à l'industrie pétrochimique ou à d'autres types d'installation utilisant un circuit dans lequel circule un fluide.

Une telle méthode d'optimisation de la configuration des orifices de cette plaque est avantageusement développée sous forme d'un algorithme qui permet d'obtenir une distribution de fluide sensiblement uniforme en aval de la plaque avec une faible augmentation de la perte de charge liée à l'insertion de la plaque.

Cette méthode permet de définir la topologie des orifices à percer :

- la distribution des trous, notamment leur nombre, leur distance, leur diamètre ou surface de passage
- la forme des trous : rond; carrés, ou autre. Suivant la forme du trou, une dimension caractéristique dudit trou, telle que sa largeur, peut être considérée comme correspondant audit diamètre du trou qui sert aux calculs ;
- la variation des dimensions des trous en fonction de leur localisation sur la plaque.

Avantageusement, les étapes de procédé décrites ci-dessus sont réalisées par des instructions de code de programme exécutées sur un ordinateur.

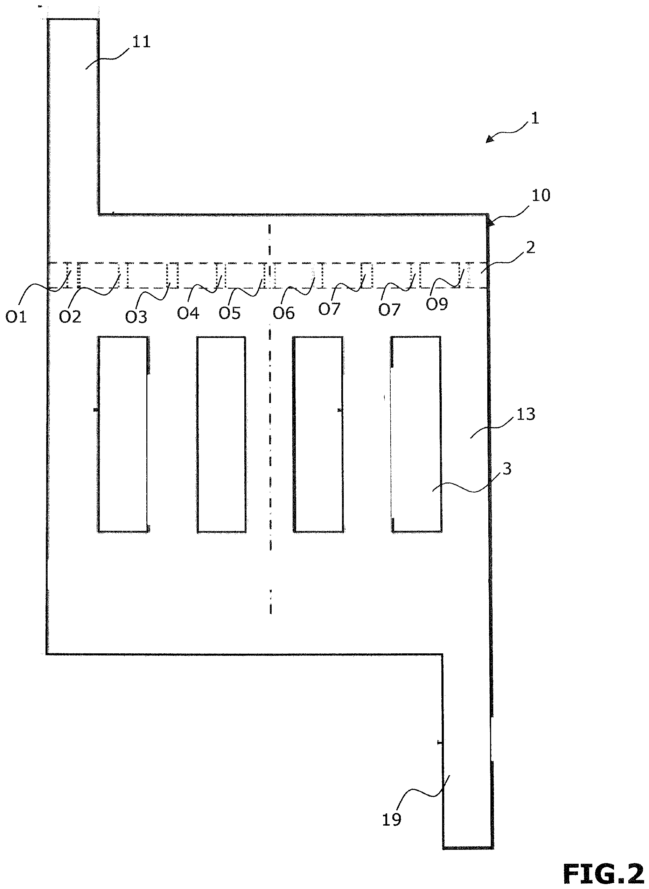

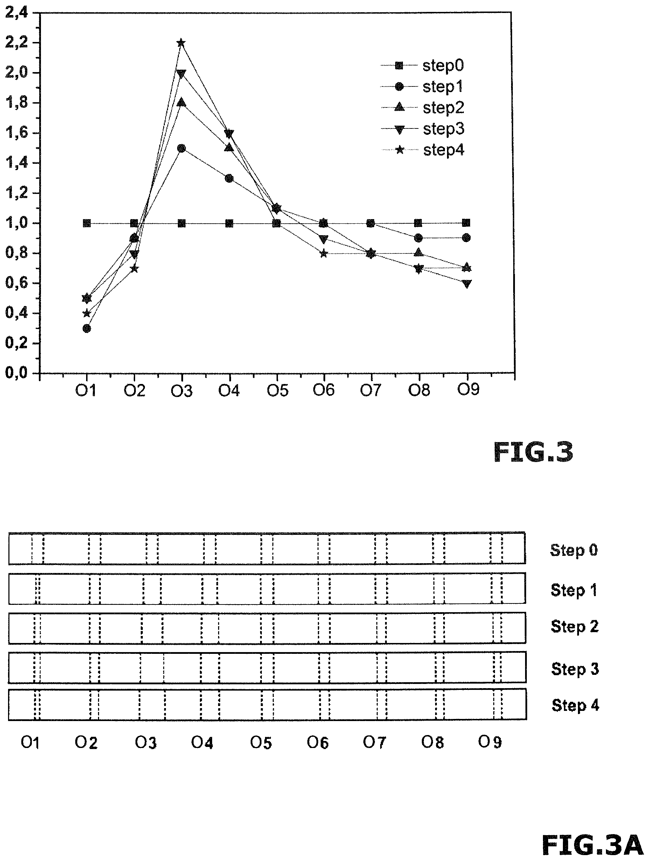

Des résultats d'essais sont présentés aux figures 3 à 4 pour un procédé appliqué comme détaillé ci-dessus sur une géométrie en 2D de l'échangeur de chaleur tel qu'illustré à la figure 2. La figure 3 montre les valeurs de diamètre modifiées pour chaque orifice lors de quatre cycles (ou itérations) de calcul réalisés successivement à partir d'une définition initiale de diamètre correspondant à la courbe Step0. Pour rappel le graphique de la figure 3 représente en ordonnées le rapport di/dmoyen avec dmoyen le diamètre moyen des orifices de la plaque et en abscisses se trouvent les références des N orifices, ici O1 à O9.

La figure 3A illustre les diamètres associés aux différents orifices de la plaque au cours de chaque cycle Step1 à Step4 à partir de l'initialisation Step0.

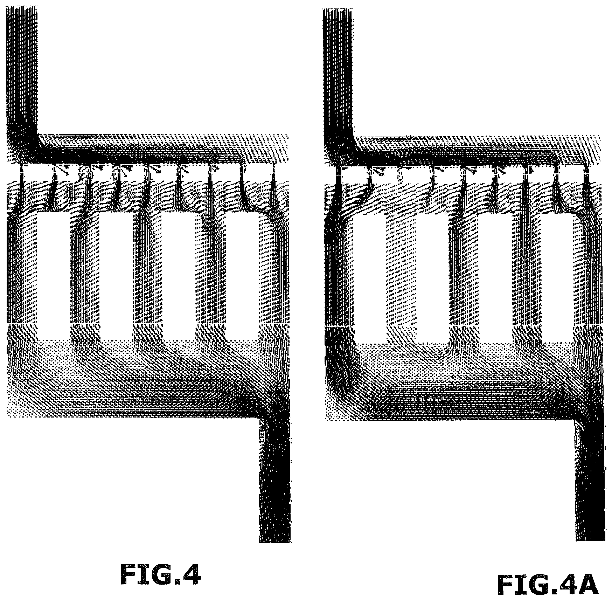

La figure 4 permet de visualiser la distribution de vitesse du fluide dans le circuit avec une plaque perforée conformément à une distribution d'orifices selon le cycle Step4. Le champ de vitesse est représenté par la densité de points. On peut alors observer que la distribution de vitesse dans les cinq canaux en parallèle de cette configuration est plus homogène que celle résultant de la distribution d'orifice initiale Step0 que l'on peut observer à la figure 4A.

L'homme du métier comprend aisément que les différentes étapes et fonctions des modes de réalisations présentés ci-dessus peuvent être réalisées sous forme de programmes d'ordinateur. En particulier, les étapes décrites ci-dessus sont réalisées sous forme d'instructions électroniques et/ou informatiques exécutables par un ou plusieurs ordinateur(s).

Ces programmes d'ordinateur, ou instructions informatiques, peuvent être contenus dans des dispositifs de stockage de programme, par exemple des supports de stockage de données numériques lisibles par ordinateur, ou des programmes exécutables. Les programmes ou instructions peuvent également être exécutés à partir de périphériques de stockage de programme.

**Revendications**

1. Procédé mis en oeuvre par ordinateur de détermination de caractéristiques d'orifices (O1,..., O9) à ménager à travers une plaque (2), ladite plaque (2) étant destinée à être positionnée dans un circuit (10) en travers du passage de fluide (7), ledit procédé comprend les étapes suivantes :

   - a) De préférence, définition de données opérationnelles du circuit, lesdites données comprenant : la température du fluide, et/ou la pression du fluide, et/ou le flux de chaleur reçu et/ou la gravité ;
   - b) Définition (401) de données du fluide, dont le débit entrant dans le circuit, noté Q, et, de préférence, la viscosité et/ou la compressibilité et/ou la densité dudit fluide, en fonction de la température du fluide et/ou de la pression du fluide,
   - c) Définition (402) de caractéristiques relatives aux orifices, lesdites caractéristiques comprenant :

      ▪ un nombre d'orifices, noté N,
      ▪ pour chaque orifice,

         - soit un segment, appelé segment de contrôle, de longueur notée $L^*_i$,
         - soit une surface appelée surface de contrôle, notée $S^*_i$,

      chaque segment ou surface de contrôle correspondant à un découpage d'au moins une partie de la longueur, notée L, de la plaque (2) ou de la surface, notée S, de la plaque de telle sorte que les segments ou surfaces de contrôle sont de préférence jointi(f)(ve)s et contiennent l'orifice correspondant ;
      ▪ le diamètre, noté $d_i$, ou la surface, notée $a_i$, de passage de fluide de chaque orifice ;

   - d) Maillage (403) dudit circuit (10), de la plaque (2) avec les orifices correspondants et, le cas échéant, d'un ou des autres éléments (3) présents à l'intérieur dudit circuit (10) ;
   - e) Détermination (404) de la vitesse du flux de fluide en plusieurs mailles, de préférence au niveau de chaque maille, en fonction desdites données de fluide et, de préférence, desdites données opérationnelles du circuit ;
   - f) Calcul (405) du débit de fluide $Q_i$ à travers chaque orifice de la plaque (2) au moins en fonction du diamètre $d_i$ ou de la surface $a_i$ dudit orifice, et de la vitesse déterminée du flux de fluide au niveau dudit orifice,
   - g) Calcul pour chaque orifice du débit surfacique, noté $Qs_i$, par division du débit de fluide $Qi$ par la longueur $L^*_i$ du segment de contrôle ou par la surface $S^*_i$ de contrôle associée audit orifice, et calcul du débit surfacique moyen, noté $\overline{Q_s}$, correspondant au rapport du débit entrant Q sur la longueur L ou la surface S de la plaque (2),
   - h) Détermination (406) du caractère optimal ou non des caractéristiques des orifices de la plaque (2) comprenant :
   Pour chaque orifice, la comparaison du débit surfacique $Qs_i$, avec le débit surfacique moyen $\overline{Q_s}$, et

      - si, pour chaque orifice, la différence en valeur absolue entre le débit surfacique $Qs_i$ et le débit surfacique moyen $\overline{Q_s}$ , est comprise dans une plage de valeurs prédéfinie, alors les caractéristiques des orifices sont considérées comme optimales,
      - sinon

         ▪ Modification (407) d'au moins une desdites caractéristiques d'au moins une partie des orifices ;
         ▪ Répétition des étapes d) à h).

2. Procédé selon la revendication 1, **caractérisé en ce que** ladite au moins une caractéristique modifiée (407) d'au moins une partie des orifices (O1,..., O9) est le diamètre $d_i$ ou la surface $a_i$ de passage de fluide de l'orifice.

3. Procédé selon la revendication 2, **caractérisé en ce que** le diamètre $d_i$ ou la surface $a_i$ de passage de fluide de l'orifice (O1,..., O9) est modifié(e) dans le sens d'une augmentation du diamètre $d_i$ de l'orifice si le débit surfacique $Qs_i$ de l'orifice est inférieur au débit surfacique moyen $\overline{Q_s}$, et inversement.

4. Procédé selon l'une des revendications précédentes, **caractérisé en ce que** ladite au moins une caractéristique modifiée (407) d'au moins une partie des orifices (O1,..., O9) est le nombre N d'orifices.

5. Procédé selon l'une des revendications précédentes, **caractérisé en ce que** ladite au moins une caractéristique modifiée (407) d'au moins une partie des orifices (O1,..., O9) est la longueur L*$_i$ du segment ou la surface S*$_i$ de contrôle de l'orifice, sans contrainte d'égalité avec la longueur L*$_i$ de segment ou la surface S*$_i$ de contrôle des autres orifices.

6. Procédé selon l'une des revendications 1 à 4, **caractérisé en ce que** la longueur L*$_i$ de chaque segment de contrôle, ou chaque surface S*$_i$ de contrôle, est définie comme étant égale à la longueur de chacun des autres segments, ou égale à chacune des autres surfaces de contrôle.

7. Procédé selon l'une des revendications précédentes, **caractérisé en ce que** l'étape de modification (407) d'au moins une caractéristique d'au moins une partie des orifices (O1,..., O9) est réalisée en conservant une valeur de porosité de plaque constante, ladite porosité de plaque étant définie comme la somme des diamètres, ou surfaces, de passage des orifices divisée par la longueur, ou surface, de la plaque.

8. Procédé selon l'une des revendications 2 ou 3, **caractérisé en ce que** le diamètre $d_i$ ou la surface Si de passage de fluide de l'orifice (O1,..., O9), noté $d_{i,t}$ ou $a_{i,t}$, est modifié (407) en $d_{i,t+1}$ ou $a_{i,t+1}$ de telle sorte que :

$$\Delta d_{i,t+1} = \gamma d_{i,t}\left(1 - \frac{Q_{si}}{\overline{Q_s}}\right)$$

avec $\Delta d_{i,t+1} = d_{i,t+1} - d_{i,t}$ et $\gamma$ étant un coefficient réel strictement positif
ou

$$\Delta a_{i,t+1} = \gamma a_{i,t}\left(1 - \frac{Q_{si}}{\overline{Q_s}}\right)$$

avec $\Delta a_{i,t+1} = a_{i,t+1} - a_{i,t}$ et $\gamma$ étant un coefficient réel strictement positif.

9. Procédé selon l'une des revendications précédentes, **caractérisé en ce que**, pour chaque orifice, le diamètre $d_i$, ou la surface $a_i$, de passage et la longueur L*$_i$ du segment, ou la surface S*$_i$, de contrôle sont choisi(e)s de telle sorte que $d_i/L*_i$ est inférieur ou égal à 1, ou $a_i/S*_i$ est inférieur ou égal à 1.

10. Procédé selon l'une des revendications précédentes, **caractérisé en ce que** les étapes d) à h) correspondant à un cycle de calcul, le procédé comprend l'exécution d'une première série de cycles de calcul, avec modification à l'étape h) d'une caractéristique d'au moins une partie des orifices, et l'exécution d'une deuxième série de cycles de calcul, avec modification à l'étape h) d'une autre caractéristique d'au moins une partie des orifices.

11. Procédé selon la revendication 10 prise en combinaison de la revendication 7, **caractérisé en ce que** chaque pluralité de cycles est réalisée avec une valeur de porosité de plaque constante d'un cycle à l'autre d'une même série, mais avec une valeur de porosité de plaque différente d'une série à l'autre.

12. Procédé selon l'une des revendications 10 ou 11, **caractérisé en ce que** le procédé comprend :

- l'exécution de la première série de cycles de calcul jusqu'à ce que les caractéristiques des orifices (O1,..., O9) définies soient considérées comme optimales, et
- l'exécution de la deuxième série de cycles de calcul jusqu'à ce que les caractéristiques des orifices (O1,..., O9) définies soient considérées comme optimales,
- le calcul pour chacune desdites séries de cycles de calcul de la perte de charge associée aux caractéristiques des orifices considérées comme optimales,
- sélection des caractéristiques des orifices considérées comme optimales correspondant à la série de cycle de calcul pour laquelle la perte de charge est la plus petite.

13. Procédé selon l'une des revendications précédentes, **caractérisé en ce que**, les étapes d) à h) correspondant à un cycle de calcul, une série de cycle de calcul est réalisée avec une plaque de forme et/ou dimension donnée(s) et une deuxième série de calcul est réalisée avec une autre forme et/ou dimension de plaque.

14. Programme d'ordinateur comprenant des instructions de code de programme pour l'exécution des étapes du procédé selon l'une des revendications 1 à 13, lorsque ledit programme est exécuté sur un ordinateur.

**Patentansprüche**

1. Verfahren zur Durchführung mit dem Computer zur Bestimmung der Eigenschaften von auf einer Platte zu bohrenden Löchern (O1 ,..., O9), wobei die Platte (2) ausgelegt ist, um in einem Schaltkreis (10) quer zum Fluiddurchgang (7) positioniert zu sein, wobei das Verfahren die folgenden Schritte umfasst:

- a) Vorzugsweise Definieren von Betriebsdaten des Schaltkreises, wobei die Daten umfassen: die Temperatur des Fluids und/oder den Druck des Fluids und/oder den erhaltenen Wärmefluss und/oder die Schwerkraft;
- b) Definieren (401) der Daten des Fluids, dessen Durchsatz, der in den Schaltkreis eintritt, bezeichnet als Q, und vorzugsweise der Viskosität und/oder der Komprimierbarkeit und/oder der Dichte des Fluids in Funktion der Temperatur des Fluids und/oder des Drucks des Fluids,
- c) Definieren (402) von Eigenschaften mit Bezug auf Öffnungen, wobei die Eigenschaften umfassen:

   ▪ eine Anzahl von Öffnungen, bezeichnet als N,
   ▪ für jede Öffnung

      - entweder ein Segment, genannt Steuersegment, mit einer Länge, bezeichnet als $L^*_i$,
      - oder eine Fläche, genannt Steuerfläche, bezeichnet als $S^*_i$,

   wobei jedes Segment oder jede Steuerfläche einem Zuschnitt von mindestens einem Teil der Länge, bezeichnet als L, der Platte (2) oder der Fläche, bezeichnet als S, der Platte entspricht, so dass die Segmente oder Steuerflächen vorzugsweise aneinandergesetzt sind und die entsprechende Öffnung enthalten;
   ▪ den Durchmesser, bezeichnet als $d_i$, oder die Fläche, bezeichnet als $a_i$, des Fluiddurchgangs jeder Öffnung;

d) Vernetzen (403) des Schaltkreises (10), der Platte (2) mit den entsprechenden Öffnungen und, gegebenenfalls, eines oder der anderen Elemente (3), die im Inneren des Schaltkreises (10) vorhanden sind;
- e) Bestimmen (404) der Geschwindigkeit des Fluidflusses in mehreren Netzen, vorzugsweise auf dem Niveau jedes Netzes, in Funktion der Fluiddaten und vorzugsweise der Betriebsdaten des Schaltkreises;
- f) Berechnen (405) des Fluiddurchsatzes $Q_i$ durch jede Öffnung der Platte (2) mindestens in Funktion des Durchmessers $d_i$ oder der Fläche $a_i$ der Öffnung und der bestimmten Geschwindigkeit des Fluidflusses auf dem Niveau der Öffnung,
- g) Berechnen, für jede Öffnung des Flächendurchsatzes, bezeichnet als $Qs_i$, durch Division des Fluiddurchsatzes $Q_i$ durch die Länge $L^*_i$ des Steuersegments oder durch die Steuerfläche $S^*_i$, die mit der Öffnung assoziiert ist, und Berechnen des mittleren Flächendurchsatzes, bezeichnet als $\overline{Q}_s$, der dem Verhältnis des eintretenden Durchsatzes Q zur Länge L oder Fläche S der Platte (2) entspricht,
- h) Bestimmen (406) des optimalen oder nicht optimalen Charakters der Eigenschaften der Öffnungen der Platte (2), umfassend:

   für jede Öffnung den Vergleich des Flächendurchsatzes $Qs_i$ mit dem mittleren Flächendurchsatz $\overline{Q}_s$, und

      - wenn bei jeder Öffnung die Differenz des absoluten Werts zwischen dem Flächendurchsatz $Q_{si}$ und dem mittleren Flächendurchsatz $\overline{Q}_s$ in einem vordefinierten Wertebereich liegt, dann werden die Eigenschaften der Öffnungen als optimal betrachtet,
      - andernfalls

         ▪ Modifizieren (407) mindestens einer der Eigenschaften mindestens eines Teils der Öffnungen;
         ▪ Wiederholen der Schritte d) bis h).

2. Verfahren nach Anspruch 1, **dadurch gekennzeichnet, dass** die mindestens eine modifizierte Eigenschaft (407) mindestens eines Teils der Öffnungen (O1 ,..., O9) der Durchmesser $d_i$ oder die Fläche $a_i$ des Fluiddurchgangs der Öffnung ist.

3. Verfahren nach Anspruch 2, **dadurch gekennzeichnet, dass** der Durchmesser $d_i$ oder die Fläche $a_i$ des Fluiddurchgangs der Öffnung (O1 ,..., O9) in Richtung einer Erhöhung des Durchmessers $d_i$ der Öffnung modifiziert wird, wenn der Flächendurchsatz $Q_{si}$ der Öffnung geringer als der mittlere Flächendurchsatz $\overline{Q}_s$ ist und umgekehrt.

4. Verfahren nach einem der vorhergehenden Ansprüche, **dadurch gekennzeichnet, dass** die mindestens eine modifizierte Eigenschaft (407) mindestens eines Teils der Öffnungen (O1 ,..., O9) die Anzahl N von Öffnungen ist.

5. Verfahren nach einem der vorhergehenden Ansprüche, **dadurch gekennzeichnet, dass** die mindestens eine modifizierte Eigenschaft (407) mindestens eines Teils der Öffnungen (O1 ,..., O9) die Länge $L^*_i$ des Segments oder die Steuerfläche $S^*_i$ der Öffnung ist, ohne Gleichheitsbeschränkung mit der Segment-

länge L\*$_i$ oder der Steuerfläche S\*$_i$ der anderen Öffnungen.

6. Verfahren nach einem der Ansprüche 1 bis 4, **dadurch gekennzeichnet, dass** die Länge L\*$_i$ jedes Steuersegments oder jeder Steuerfläche S\*$_i$ als gleich der Länge jedes der anderen Segmente oder gleich jeder der anderen Steuerflächen definiert ist.

7. Verfahren nach einem der vorhergehenden Ansprüche, **dadurch gekennzeichnet, dass** der Schritt des Modifizierens (407) mindestens einer Eigenschaft mindestens eines Teils der Öffnungen (O1 ,..., O9) durchgeführt wird, indem ein Plattenporositätswert konstant gehalten wird, wobei die Plattenporosität als die Summe der Durchmesser oder Flächen des Durchgangs der Flächen, dividiert durch die Länge oder Fläche der Platte, definiert ist.

8. Verfahren nach einem der Ansprüche 2 oder 3, **dadurch gekennzeichnet, dass** der Durchmesser d$_i$ oder die Fläche S$_i$ des Fluiddurchgangs der Öffnung (O1 ,..., O9), bezeichnet als d$_{i,t}$ oder a$_{i,t}$, zu d$_{i,t+1}$ oder a$_{i,t+1}$ modifiziert wird (407), so dass:

$$\Delta d_{i,t+1} = \gamma d_{i,t}\left(1 - \frac{Q_{si}}{Q_s}\right)$$

wobei $\Delta d_{i,t+1} = d_{i,t+1} - d_{i,t}$ und $\gamma$ ein streng positiver reeller Koeffizient sind,
oder

$$\Delta a_{i,t+1} = \gamma a_{i,t}\left(1 - \frac{Q_{si}}{Q_s}\right)$$

wobei $\Delta a_{i,t+1} = a_{i,t+1} - a_{i,t}$ und $\gamma$ ein streng positiver reeller Koeffizient sind.

9. Verfahren nach einem der vorhergehenden Ansprüche, **dadurch gekennzeichnet, dass** für jede Öffnung der Durchmesser d$_i$, oder die Fläche a$_i$ des Durchgangs und die Länge L\*$_i$ des Segments oder die Steuerfläche S\*$_i$ derart gewählt sind, dass d$_i$/L\*$_i$ kleiner oder gleich 1 ist oder a$_i$/S\*$_i$ kleiner oder gleich 1 ist.

10. Verfahren nach einem der vorhergehenden Ansprüche, **dadurch gekennzeichnet, dass**, da die Schritte d) bis h) einem Berechnungszyklus entsprechen, das Verfahren die Durchführung einer ersten Reihe von Berechnungzyklen umfasst, mit der Modifikation in Schritt h) einer Eigenschaft mindestens eines Teils der Öffnungen, und der Durchführung einer zweiten Reihe von Berechnungszyklen, mit der Modifikation in Schritt h) einer anderen Eigenschaft mindestens eines Teils der Öffnungen.

11. Verfahren nach Anspruch 10 in Kombination mit Anspruch 7, **dadurch gekennzeichnet, dass** jede Vielzahl von Zyklen mit einem konstanten Plattenporositätswert von einem Zyklus zum anderen der gleichen Reihe durchgeführt wird, jedoch mit einem verschiedenen Plattenporositätswert von einer Reihe zur anderen.

12. Verfahren nach einem der Ansprüche 10 oder 11, **dadurch gekennzeichnet, dass** das Verfahren umfasst:

   - Durchführen der ersten Reihe von Berechnungszyklen, bis die definierten Eigenschaften der Öffnungen (O1 ,..., O9) als optimal betrachtet werden, und
   - Durchführen der zweiten Reihe von Berechnungszyklen, bis die definierten Eigenschaften der Öffnungen (O1 ,..., O9) als optimal betrachtet werden,
   - Berechnen für jede der Reihen von Berechnungszyklen des Lastverlusts, der mit den Eigenschaften der Öffnungen assoziiert ist, die als optimal betrachtet werden,
   - Auswählen der Eigenschaften der Öffnungen, die als optimal betrachtet werden, die der Reihe von Berechnungszyklen entsprechen, für die der Lastverlust am kleinsten ist.

13. Verfahren nach einem der vorhergehenden Ansprüche, **dadurch gekennzeichnet, dass** da die Schritte d) bis h) einem Berechnungszyklus entsprechen, eine Reihe von Berechnungszyklen mit einer Platte einer gegebenen Form und/oder Abmessung durchgeführt wird, und eine zweite Reihe von Berechnungen mit einer weiteren Form und/oder Abmessung der Platte durchgeführt wird.

14. Computerprogramm, umfassend Programm-Codeanweisungen zur Durchführung der Schritte des Verfahrens nach einem der Ansprüche 1 bis 13, wenn das Programm auf einem Computer durchgeführt wird.

**Claims**

1. A computer-assisted method for determining characteristics of holes (O1, ..., O9) to be provided through a plate (2), said plate (2) being intended to be positioned in a circuit (10) through the fluid passage (7), said method comprising the following steps:

   - a) Preferably, defining operational data of the circuit, said data comprising: the temperature of the fluid, and/or the pressure of the fluid, and/or received heat flow and/or the gravity;
- b) Defining (401) data of the fluid, including the flow rate entering the circuit, denoted Q, and preferably the viscosity and/or the compressibility and/or the density of said fluid, as a function of the temperature of the fluid and/or the pressure of the fluid,
- c) Defining (402) characteristics relative to the holes, said characteristics comprising:

- a number of holes, denoted N,
- for each hole,

- either a segment, called control segment, with length denoted $L^*_i$,
- or a surface, called control surface, denoted $S^*_i$,

each control segment or surface corresponding to a division of at least part of the length, denoted L, of the plate (2) or the surface, denoted S, of the plate such that the control segments or surfaces are preferably contiguous and contain the corresponding hole;
- the fluid passage diameter, denoted $d_i$, or the surface, denoted $a_i$, of each hole;

- d) Meshing (403) of said circuit (10), of the plate (2) with the corresponding holes and, if applicable, of one or several other elements (3) present inside said circuit (10);
- e) Determining (404) the speed of the fluid flow in several meshes, preferably at each mesh, as a function of said fluid data, and preferably said operational data of the circuit;
- f) Calculating (405) the fluid flow rate $Q_i$ through each hole of the plate (2) at least as a function of the diameter $d_i$ or the surface $a_i$ of said hole, and the determined speed of the fluid flow at said hole,
- g) Calculating, for each hole of the surface flow rate, denoted $Qs_i$, by dividing the fluid flow rate $Q_i$ by the length $L^*_i$ of the control segment or by the control surface $S^*_i$ associated with said hole, and calculating the average surface flow rate, denoted $\overline{Q_s}$, corresponding to the ratio of the incoming flow rate Q to the length L or the surface S of the plate (2),
- h) Determining (406) the optimal or nonoptimal nature of the features of the holes of the plate (2) comprising:

For each hole, comparing the surface flow rate $Qs_i$ with the average surface flow rate $\overline{Q_s}$, and

- if, for each hole, the difference in absolute value between the surface flow rate $Qs_i$ and the average surface flow rate $\overline{Q_s}$ is within a predefined value range, then the characteristics of the holes are considered optimal,
- if not

- Modifying (407) at least one of said characteristics of at least some of the holes;
- Repeating steps d) to h).

2. The method according to claim 1, **characterized in that** said at least one modified characteristic (407) of at least some of the holes (O1, ... O9) is the fluid passage diameter $d_i$ or surface $a_i$ of the hole.

3. The method according to claim 2, **characterized in that** the fluid passage diameter $d_i$ or surface $a_i$ of the hole (O1, ..., O9) is modified in the direction of an increase of the diameter $d_i$ of the hole if the surface flow rate $Qs_i$ of the hole is lower than the average surface flow rate $\overline{Q_s}$, and vice versa.

4. The method according to one of the preceding claims, **characterized in that** said at least one modified characteristic (407) of at least some of the holes (O1, ..., O9) is the number N of holes.

5. The method according to one of the preceding claims, **characterized in that** said at least one modified characteristic (407) of at least some of the holes (O1, ..., O9) is the length $L^*_i$ of the control segment or surface $S^*_i$ of the hole, without equality constraint with the segment length $L^*_i$ or the control surface $S^*_i$ of the other holes.

6. The method according to one of claims 1 to 4, **characterized in that** the length $L^*_i$ of each control segment, or each control surface $S^*_i$, is defined as being equal to the length of each of the other segments, or equal to each of the other control surfaces.

7. The method according to one of the preceding claims, **characterized in that** the step (407) for modifying at least one characteristic of at least some of the holes (O1, ..., O9) is carried out while keeping a constant plate pore size value, said plate pore size being defined as the sum of the passage diameters, or surfaces, of the holes divided by the length, or surface, of the plate.

8. The method according to one of claims 2 or 3, **char-**

**acterized in that** the fluid passage diameter $d_i$ or surface $S_i$ of the hole (O1, ..., O9), denoted $D_{i,t}$ or $a_{i,t}$, is modified (407) as $d_{i,t+1}$ or $a_{i,t+i}$ such that:

$$\Delta d_{i,t+1} = \gamma d_{i,t}\left(1 - \frac{Q_{si}}{\overline{Q_s}}\right)$$

with $\Delta d_{i,t+1} = d_{i,t+1} - d_{i,t}$ and $\gamma$ being a real or strictly positive coefficient
or

$$\Delta a_{i,t+1} = \gamma a_{i,t}\left(1 - \frac{Q_{si}}{\overline{Q_s}}\right)$$

with $\Delta a_{i,t+1} = a_{i,t+1} - a_{i,t}$ and $\gamma$ being a strictly positive real coefficient.

9.  The method according to one of the preceding claims, **characterized in that**, for each hole, the passage diameter $d_i$, or surface $a_i$, and the length $L^*_i$ of the segment, or the control surface $S^*_i$, are chosen such that $d_i/L^*_i$ is less than or equal to 1, or $a_i/S^*_i$ is less than or equal to 1.

10. The method according to one of the preceding claims, **characterized in that** steps d) to h) corresponding to a calculation cycle, the method comprises carrying out a first series of calculation cycles, with modification in step h) of a characteristic of at least some of the holes, and the performance of a second series of calculation cycles, with modification in step h) of another characteristic of at least some of the holes.

11. The method according to claim 10 combined with claim 7, **characterized in that** each plurality of cycles is done with a constant plate pore size value from one cycle to another in a same series, but with a different plate pore size value from one series to another.

12. The method according to one of claims 10 or 11, **characterized in that** the method comprises:

    - carrying out the first series of calculation cycles until the defined characteristics of the holes (O1, ..., O9) are considered optimal, and
    - carrying out the second series of calculation cycles until the defined characteristics of the holes (O1, ..., O9) are considered optimal,
    - calculating, for each of said series of calculation cycles, the pressure loss associated with the characteristics of the holes considered to be optimal,

    - selecting the characteristics of the holes considered to be optimal corresponding to the calculation cycle series for which the pressure loss is smallest.

13. The method according to one of the preceding claims, **characterized in that**, steps d) to h) corresponding to a calculation cycle, one calculation cycle series is done with a plate having a given shape and/or size and a second calculation series is done with another plate shape and/or size.

14. A computer program comprising program code instructions for carrying out steps of the method according to one of claims 1 to 13, when said program is executed on a computer.

**FIG.1**

FIG.2

FIG.3

FIG.3A

FIG.4

FIG.4A

**FIG.5**

**FIG.6**

**FIG.7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **WEN J. et al.** *Study of flow distribution and its improvement on the header of plate-fin heat exchanger*

- **W. WANG et al.** *Effects of Distribution Channel Dimensions on Flow Distribution and Pressure Drop in a Plate-Fin Heat Exchanger*